(19) Europäisches Patentamt
European Patent Office
Office européen des brevets

(11) Veröffentlichungsnummer: **0 450 179 A1**

(12) # EUROPÄISCHE PATENTANMELDUNG

(21) Anmeldenummer: **90124864.1**

(51) Int. Cl.[5]: **C08G 18/10**, C08G 18/32

(22) Anmeldetag: **20.12.90**

(30) Priorität: **17.03.90 DE 4008628**

(43) Veröffentlichungstag der Anmeldung:
**09.10.91 Patentblatt 91/41**

(84) Benannte Vertragsstaaten:
**DE ES FR GB IT NL SE**

(71) Anmelder: **BAYER AG**
**W-5090 Leverkusen 1 Bayerwerk(DE)**

(72) Erfinder: **Calaminus, Wolfgang, Dr.**
**Lisztstrasse 1**
**W-5300 Bonn 1(DE)**
Erfinder: **Müller, Hanns Peter, Dr.**
**Weizenfeld 36**
**W-5060 Bergisch Gladbach 2(DE)**
Erfinder: **von Gizycki, Ulrich, Dr.**
**Wiembachallee 24**
**W-5090 Leverkusen 3(DE)**

(54) **Polyurethanharnstoffe mit Diaminoanthrachinonen als Kettenverlängerer sowie Verfahren zur Herstellung der Polyurethanharnstoffe.**

(57) Die vorliegende Erfindung betrifft Polyurethanharnstoffe, erhältlich durch Umsetzung von Polyolen mit Diisocyanaten und Kettenverlängern, wobei als Kettenverlängerer Diaminoanthrachinone alleine oder im Gemisch mit üblichen Kettenverlängern verwendet werden sowie ein Verfahren zu ihrer Herstellung

EP 0 450 179 A1

Die vorliegende Erfindung betrifft neue Polyurethanharnstoffe mit Diaminoanthrachinonen als Kettenverlängerer sowie ein Verfahren zu ihrer Herstellung.

Polyurethanharnstoffe in denen als Kettenverlängerer niedermolekulare Diamine, wie z.B. Bis-(4-amino-3-chlorphenyl)-methan, 4-Chlor-3,5-diamino-benzoesäure-(2-methyl-propylester), 4-Chlor-3,5-diamino-toluol und Bis-(4-amino-3-methoxycarbonylphenyl)-methan, 1,2-Bis-(2-amino-phenylthio)-ethan oder 1,3-Bis-(4-amino-benzoyloxy)-propan eingesetzt werden sind bekannt.

Es wurde nun gefunden, daß man Polyurethanharnstoffe mit ausgezeichneten Eigenschaften durch Umsetzung von Polyolen mit Diisocyanaten erhält, wenn als Kettenverlängerer Diaminoanthrachinone alleine oder im Gemisch mit üblichen Kettenverlängerern verwendet werden.

Gegenstand der Erfindung sind somit Polyurethanharnstoffe, erhältlich durch Umsetzung von Polyolen mit Diisocyanten und Kettenverlängerern, dadurch gekennzeichnet, daß als Kettenverlängerer Diaminoanthrachinone alleine oder im Gemisch mit üblichen Kettenverlängerern verwendet werden.

Als Polyole dienen vorwiegend die bekannten, aus aliphatischen Komponenten aufgebaute Polyester, Polyether, Polyestercarbonate und Polyethercarbonate vom Molgewicht 1000 - 5000, bevorzugt 2000 - 3000 besonders bevorzugt lineare, dihydroxyfunktionelle Polyole mit einem Molgewicht von etwa 2000.

Als Diisocyanate finden aliphatische oder aromatische Diisocyanate, bevorzugt Bis-(4-isocyana-phenyl)-methan, 4-Isocyanatbenzoesäure-(4-isocyanatphenyl)ester, 1,2-Bis-(4-isocyanatphenyl)-ethan, 1,4-Bis-(isocyanat)-benzol, 4,4'-Bis(isocyanat)-biphenyl, 1,2-Bis-(4-isocyanatphenyl)-ethen und 1,5-Naphthalindiisocyanat, besonders bevorzugt 1,5-Naphthalindiisocyanat und 4-Isocyanatbenzoesäure-(4-isocyanatphenyl)-ester Verwendung.

Die Polyole werden mit den Diisocyanaten nach an sich bekannten Verfahren verlängert, wobei mit einem Überschuß an Diisocyanaten von 0 - 100 % über die auf die Endgruppen der Polyole berechneten Menge gearbeitet. Bevorzugt wird mit einem Überschuß von 0 - 50 %, besonders bevorzugt mit einem Überschuß von 0 - 20 % gearbeitet.

Die so erhaltenen NCO-Prepolymere werden mit Diaminoanthrachinonen der allgemeinen Formel I

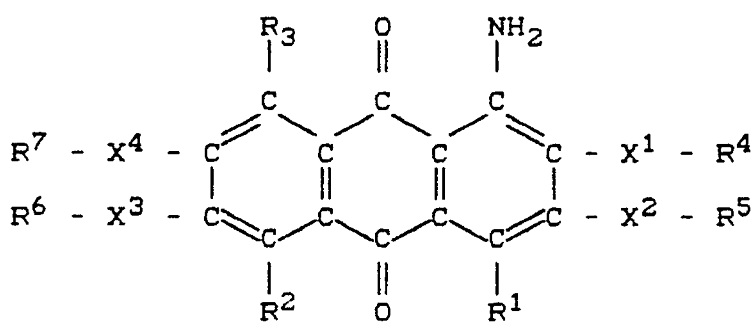

worin

$R^1$ oder $R^2$ oder $R^3$ eine $NH_2$-Gruppe bedeutet, bevorzugt ist $R^1$ oder $R^2$, besonders bevorzugt ist $R^2$ eine Amingruppe

$X^1$ - $X^4$ gleich oder verschieden O, S, $CH_2$ bedeutet, besonders bevorzugt aber fehlen kann

$R^2$, $R^3$, $R^6$, $R^7$ gleich oder verschieden $C_{1-19}$-Alkyl vorzugsweise Methyl oder Ethyl, bevorzugt Alkoxy, besonders bevorzugt Wasserstoff bedeutet,

endverlängert.

Die Endverlängerung der NCO-Prepolymere wird in Bezug auf vorhandene NCO-Gruppen mit einem Unterschuß an Diaminoanthrachinonen der allgemeinen Formel I vorgenommen, d.h. mit 70 - 100 % der berechneten Menge Kettenverlängerer, besonders bevorzugt werden 80 - 90 % der berechneten Menge Kettenverlängerer.

Es kann auch zweckmäßig sein, die Endverlängerung mit einem Gemisch aus 100 - 50 Mol-% Diaminoanthrachinonen der allgemeinen Formel I und 0 - 50 Mol-% eines niedermolekularen Diols wie z.B. Glycol, 1,4-Butandiol, 1,6-Hexandiol, 2,2-Dimethyl-1,3-propandiol, 1,4; 3,6-Bis-anhydro-D-sorbit, 1,4-Bis-(2-hydroxyethoxy)-benzol oder 1,5-Bis- (2-hydroxyethoxy)-naphthalin;
oder eines niedermolekularen Diamins, wie z.B. Bis-(4-amino-3-chlor-phenyl)-methan, 4-Chlor-3,5-diamino-benzoesäure-(2-methyl-propylester), 4-Chlor-3,5-diamino-toluol, Bis-(-amino-3-methoxycarbonyl-phenyl)-methan, 1,2-Bis-(2-amino-phenylthio)-ethan oder 1,3-Bis-(4-amino-benzoyloxy)-propan

vorzunehmen.

Bevorzugt wird auch hier mit einem Unterschuß an Kettenverlängerer in Bezug auf vorhandene NCO-Gruppen gearbeitet, d.h. mit 70 - 100 % der berechneten Menge Kettenverlängerer, besonders bevorzugt werden 80 - 90 % der berechneten Menge Kettenverlängerer.

Es ist ebenfalls möglich, das Verfahren in der sogenannten One-Shot-Arbeitsweise durchzuführen.

Es ist überraschend, daß der teilweise oder vollständige Ersatz von z.B. Butan-1,4-diol in einer üblichen Naphthalindiisocyanat (NDI)-Gießelastomerrezeptur durch Diaminoanthrachinone der allgemeinen Formel I unter den üblichen Bedingungen einer Diolverlängerung technisch durchführbar ist. Die dadurch erzielten mechanischen und thermischen Eigenschaftsverbesserungen müssen als besonders überraschend angesehen werden. Während die Schubmodulkurve eines nach Stand der Technik mit Butan-1,4-diol endverlängerten NDI-Gießelastomers bereits bei 160° C abfällt (Beispiel 7, Schubmodulkurve Abb. 7) tritt bei Endverlängerung mit Diaminoanthrachinonen der Schubmodulabfall erst bei ca. 250° C auf (Schubmodulkurven Abb. 1 - 6).

Das erfindungsgemäße Verfahren wird durch die nachfolgenden Beispiele näher erläutert.

Beispiel 1

200 g (0,1 Mol) eines aus Adipinsäure und ethylenglycol bestehenden Polyesters mit einer mittleren Molmasse von 2000 und einer OH-Zahl von 56 werden bei 120° C/20 mm entwässert. Dann gibt man 42 g (0,2 Mol) 1,5-Naphthalindiisocyanat zu und hält die Temperatur 15 min auf 130° C. Zu diesem Prepolymer werden bei 100° C 17,85 g (0,075 Mol) 1,5-Diaminoanthrachinon gegeben. Damit ergibt sich eine NCO-Kennzahl von 114. Zum Entfernen von Luftblasen wird ein Vakuum von 20 mm angelegt und das Diaminoanthrachinon unter starkem Rühren in das Prepolymer eingemischt. Nach 5 min wird in eine auf 120° C vorgeheizte Form gegossen. Die Mischung ist zu diesem Zeitpunkt noch 5 - 10 min gießfähig. Nach 24 Std. Tempern bei 120° C erhält man ein Elastomer mit vorzüglichen Eigenschaften (vergl. Schubmodulkurve Abb. 1) im Vergleich zu Beispiel 7 (Schubmodulkurve Abb. 7).

Beispiel

200 g (0,1 Mol) eines Polytetrahydrofuranpolyethers mit einer mittleren Molmasse von 2000 und einer OH-Zahl von 56 werden bei 120° C/20 mm entwässert. Dann gibt man 42 g (0,2 Mol) 1,5-Naphthalindiisocyanat zu und hält die Temperatur 15 min auf 130° C. Zu diesem Prepolymer werden bei 100° C 23,8 g (0,1 Mol) 1,5-Diaminoanthrachinon gegeben. Damit ergibt sich eine NCO-Kennzahl von 100. Zum Entfernen von Luftblasen wird ein Vakuum von 20 mm angelegt und das Diaminoanthrachinon unter starkem Rühren in das Prepolymer eingemischt. Nach 5 min wird in eine auf 120° C vorgeheizte Form gegossen. Die Mischung ist zu diesem Zeitpunkt noch 5 min gießfähig. Nach 24 Std. Tempern bei 120° C erhält man ein Elastomer mit hervorragender Oberfläche und Hochtemperaturverhalten (Schubmodulkurve Abb. 2).

Beispiel 3

Analog Beispiel 2, die Kettenverlängerung erfolgt jedoch mit 15,9 g (0,067 Mol) 1,5-Diaminoanthrachinon, wodurch sich eine NCO-Kennzahl von 120 ergibt (Schubmodulkurve Abb. 3).

Beispiel 4

Analog Beispiel 2, die Kettenverlängerung erfolgt jedoch mit 29,8 g (0,1 Mol) 1,4-Diaminoanthrachinon, wodurch sich eine NCO-Kennzahl von 100 ergibt (Schubmodulkurve Abb. 4).

Beispiel 5

Analog Beispiel 2, die Kettenverlängerung erfolgt jedoch mit 15,9 g (0,067 Mol) 1,4-Diaminoanthrachinon, wodurch sich eine NCO-Kennzahl von 120 ergibt (Schubmodulkurve Abb. 5).

200 g (0,1 Mol) eines Polytetrahydrofuranpolyethers mit einer mittleren Molmasse von 2000 und einer OH-Zahl von 56 werden bei 120° C/20 mm entwässert. Dann gibt man 63 g (0,3 Mol) 1,5-Naphthalindiisocyanat zu und hält die Temperatur 15 min auf 130° C. Zu diesem Prepolymer werden bei 100° C 47,6 g (0,2 Mol) 1,4-Diaminoanthrachinon gegeben. Damit ergibt sich eine NCO-Kennzahl von 100, jedoch ein längeres Hartsegment als in Beispiel 4. Zum Entfernen von Luftblasen wird ein Vakuum von 20 mm angelegt und das Diaminoanthrachinon unter starkem Rühren in das Prepolymer eingemischt. Nach 5 min wird in eine auf

120 °C vorgeheizte Form gegossen. Nach 24 Std. Tempern bei 120 °C erhält man ein Elastomer mit ausgezeichneter Hartsegment-/Weichsegmententmischung und hervorragenden Hochtemperatureigenschaften (Schubmodulkurve Abb. 6).

Vergleichsbeispiel 7

200 g (0,1 Mol) eines aus Adipinsäure und Ethylenglycol bestehenden Polyesters mit einer mittleren Molmasse von 2000 und einer OH-Zahl von 56 werden bei 120 °C/20 mm entwässert. Dann gibt man 42 g (0,2 Mol) 1,5-Naphthalindiisocyanat zu und hält die Temperatur 15 min auf 130 °C. Zu diesem Prepolymer werden bei 100 °C 6,75 g (0,075 Mol) Butan-14-diol gegeben. Damit ergibt sich eine NCO-Kennzahl von 114. Zum Entfernen von Luftblasen wird ein Vakuum von 20 mm angelegt und das Diol unter starkem Rühren in das Prepolymer eingemischt. Nach 60 sec. wird in eine auf 120 °C vorgeheizte Form gegossen. Die Mischung ist zu diesem Zeitpunkt noch 6 min gießfähig. Nach 24 Std. Tempern bei 120 °C erhält man ein Elastomer dessen Schubmodulkurve in Abb. 7 wiedergegeben ist.

## Patentansprüche

1. Polyurethanharnstoffe, erhältlich durch Umsetzung von Polyolen mit Diisocyanaten und Kettenverlängerern, dadurch gekennzeichnet, daß als Kettenverlängerer Diaminoanthrachinone alleine oder im Gemisch mit üblichen Kettenverlängerern verwendet werden.

2. Polyurethyharnstoffe gemäß Anspruch 1, dadurch gekennzeichnet, daß
   a) als Polyole, vorwiegend aus aliphatischen Komponenten aufgebaute Polyester, Polyether, Polyestercarbonate und Polyethercarbonate vom Molgewicht 1000 - 5000 bevorzugt 2000 - 3000 besonders bevorzugt lineare, dihydroxyfunktionelle Polyole des Molgewichts 2000,
   b) als Diisocyanate, aliphatische oder aromatische Diisocyanate, bevorzugt 1,5-Naphthalindiisocyanat Verwendung finden und
   c) der Kettenverlängerer, daß Diaminoanthrachinone der allgemeinen Formel I

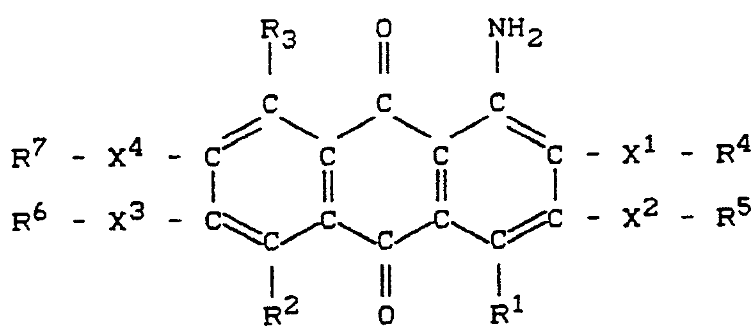

worin

| | |
|---|---|
| $R^1$ oder $R^2$ oder $R^3$ | eine $NH_2$-Gruppe bedeutet, bevorzugt ist $R^1$ oder $R^2$, besonders bevorzugt ist $R^2$ eine Amingruppe |
| $X^1$ - $X^4$ | gleich oder verschieden O, S, $CH_2$ bedeutet, besonders bevorzugt aber fehlen kann |
| $R^2$, $R^3$, $R^6$, $R^7$ | gleich oder verschieden $C_{1-19}$-Alkyl vorzugsweise Methyl oder Ethyl, bevorzugt Alkoxy, besonders bevorzugt Wasserstoff bedeutet, |

eingesetzt werden.

3. Polyurethanharnstoffe gemäß Anspruch 1 oder 2, dadurch gekennzeichnet, daß die Polyole gemäß Anspruch 2 mit einem Überschuß an Diisocyanaten gemäß Anspruch 2 von 0 - 100 % über die auf die Endgruppen der Polyole berechnete Menge hinaus verlängert sind, bevorzugt 0 - 50 %, besonders bevorzugt 0 - 20%, und wobei die Endverlängerung mit höchstens der auf die freien Isocyanatgruppen berechneten Menge an Diaminoanthrachinonen gemäß Anpruch 2 bevorzugt 80 - 100 % der berechneten Menge erfolgt.

4. Polyurethanharnstoffe gemäß einem der Ansprüche 1 - 3, dadurch gekennzeichnet, daß die Endverlängerung mit einem Gemisch aus 100 - 50 Mol% Diaminoanthrachinonen gemäß Anspruch 2 und 0 -50 Mol% eines niedermolekularen Diols oder Diamins, wobei bevorzugt 70 - 100 %, besonders bevorzugt 80 - 90 % der berechneten Menge Kettenverlängerer eingesetzt wird.

5. Verfahren zur Herstellung von Polyurethanpolyharnstoffen gemäß einem der Ansprüche 1 - 4, dadurch gekennzeichnet, daß die Endverlängerung mit Diaminoanthrachinonen alleine oder im Gemisch mit anderen bekannten Kettenverlängerern erfolgt.

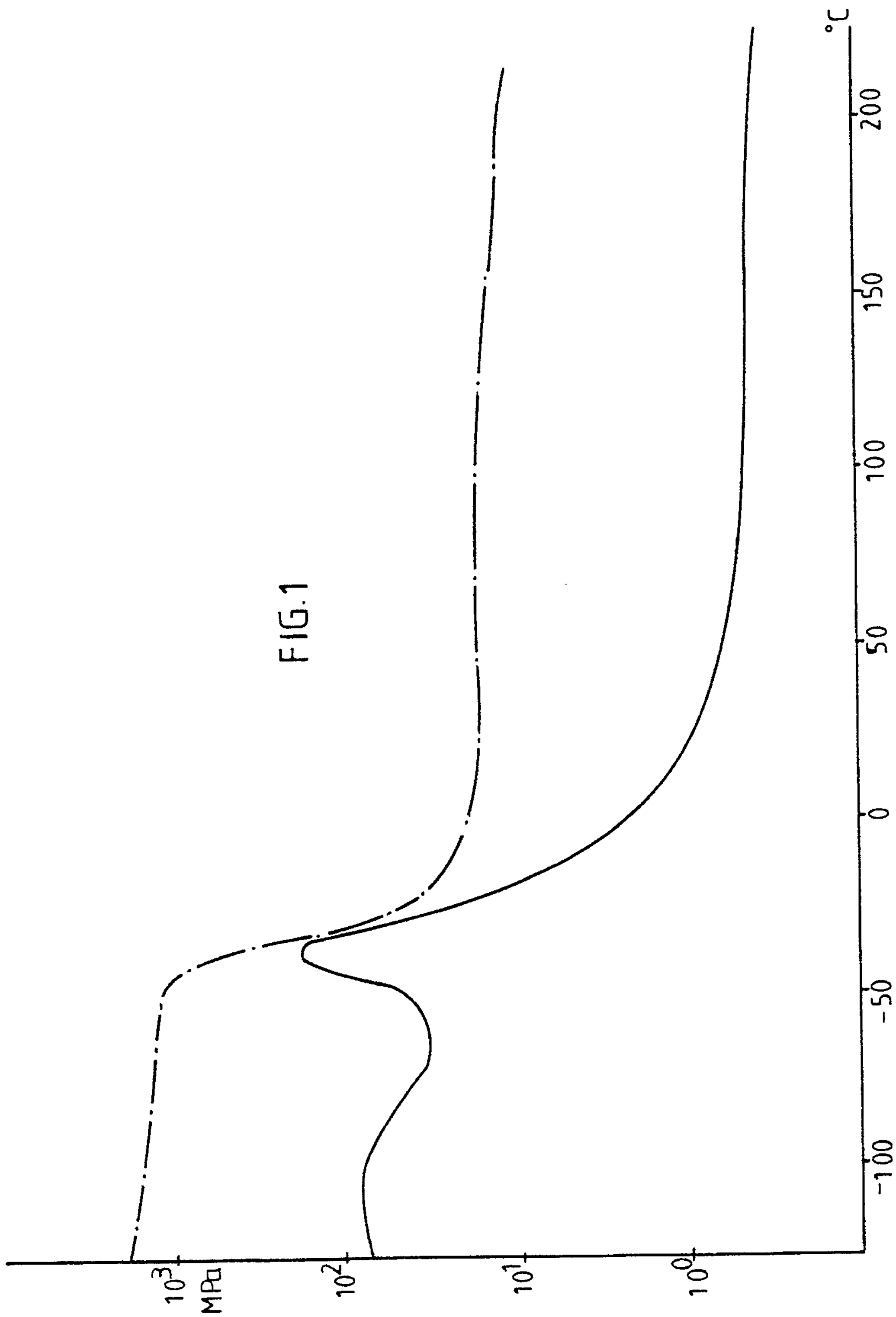


FIG.1

FIG.2

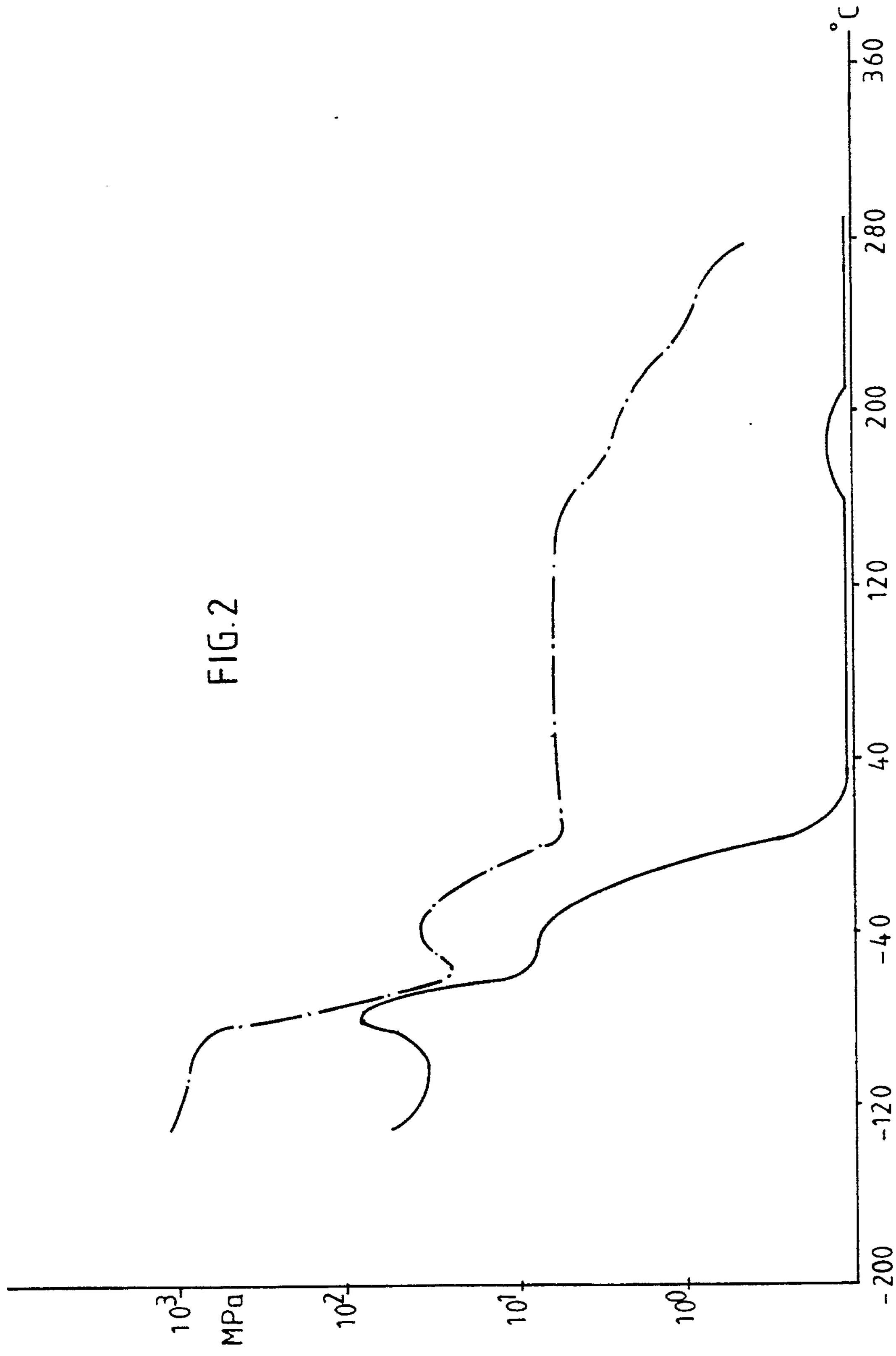

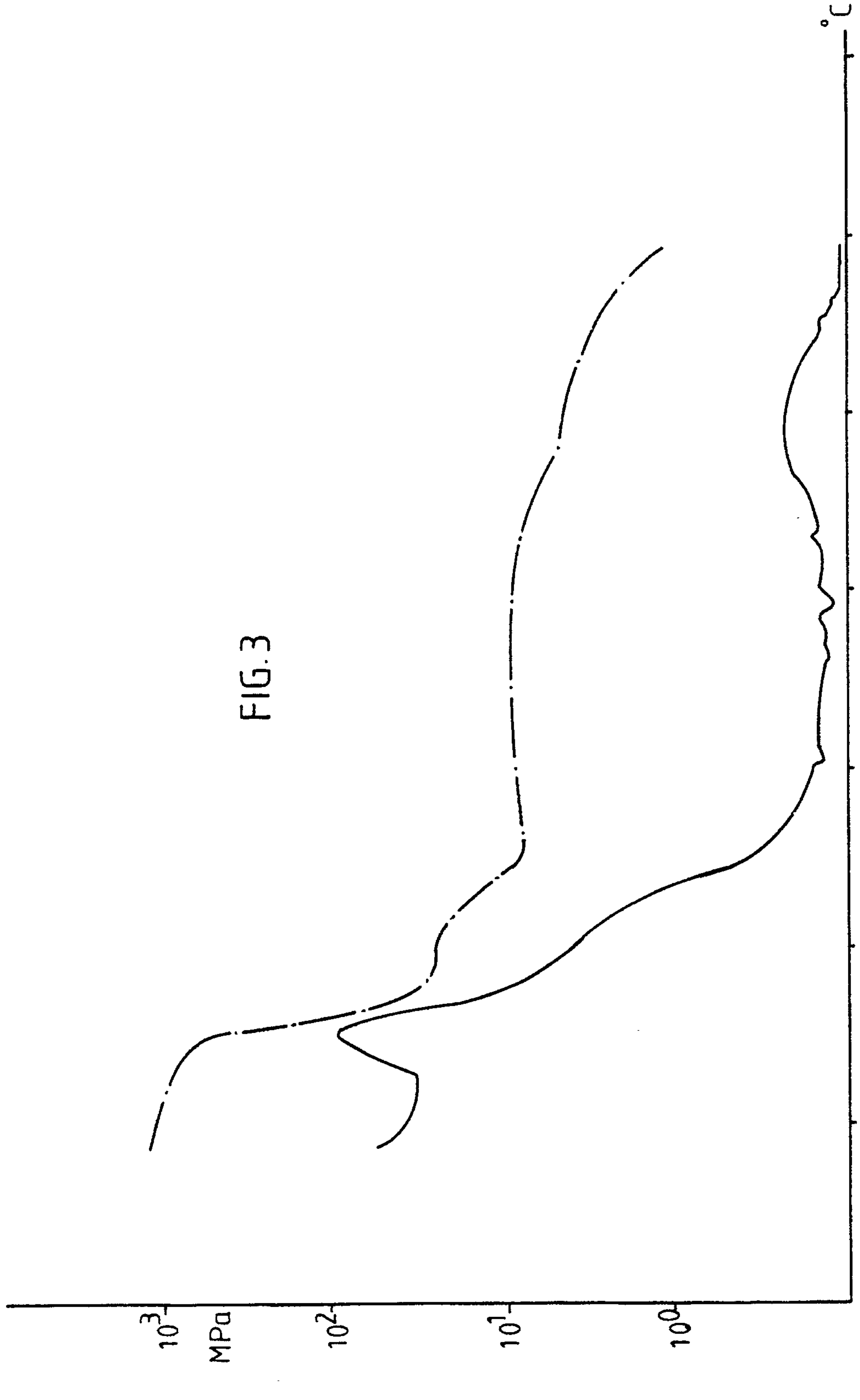


FIG.3

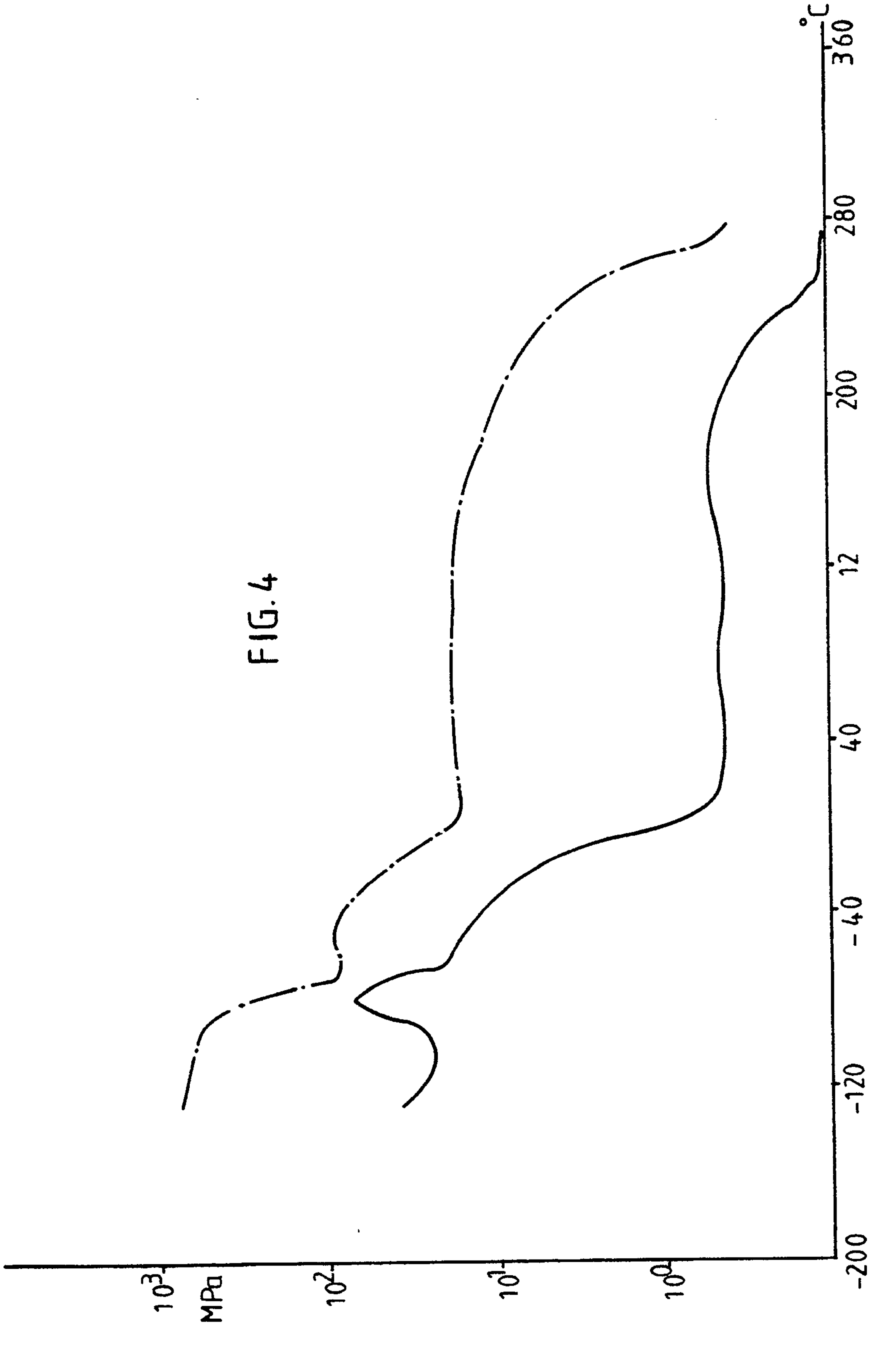


FIG. 4

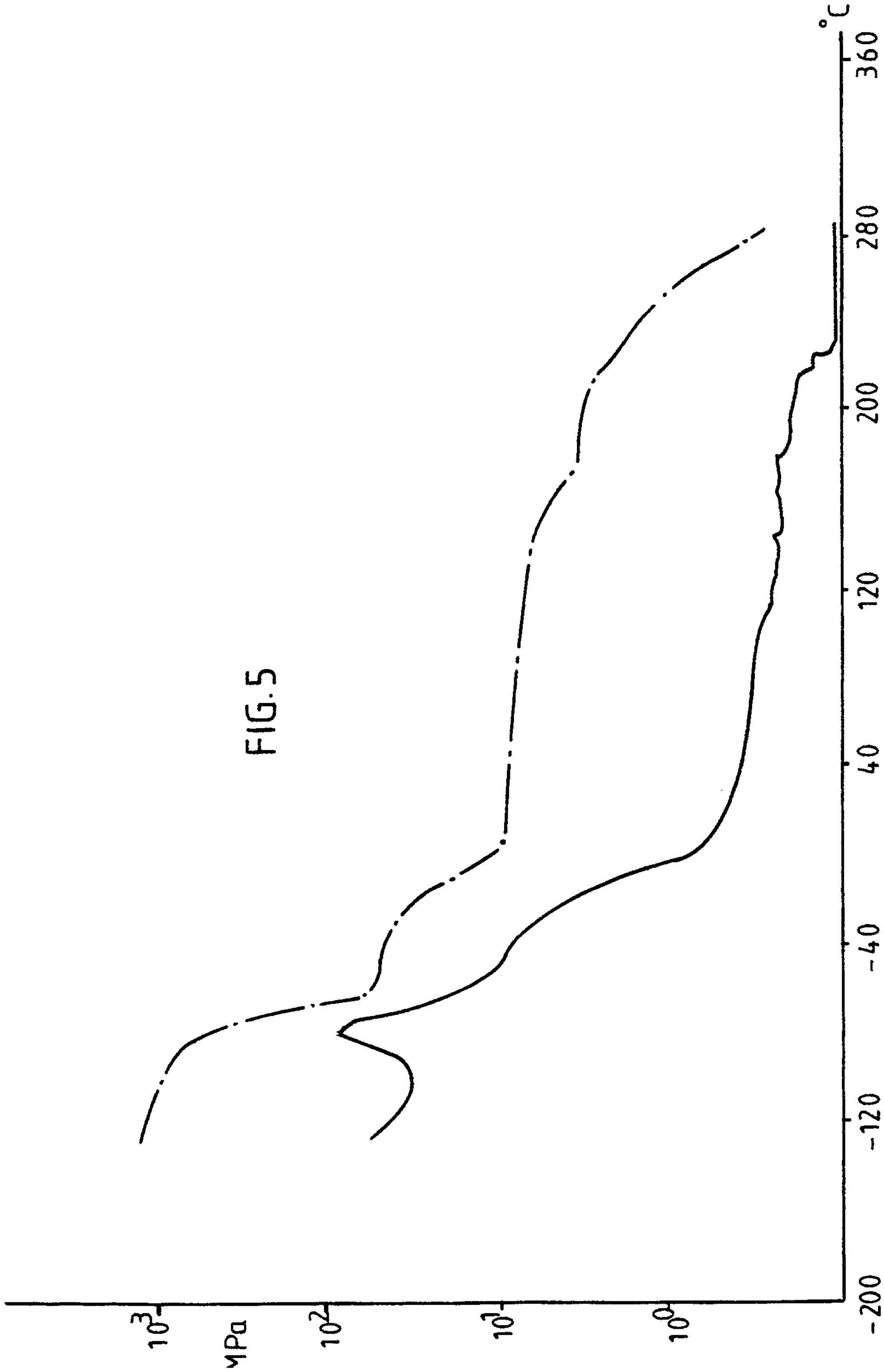


FIG. 5

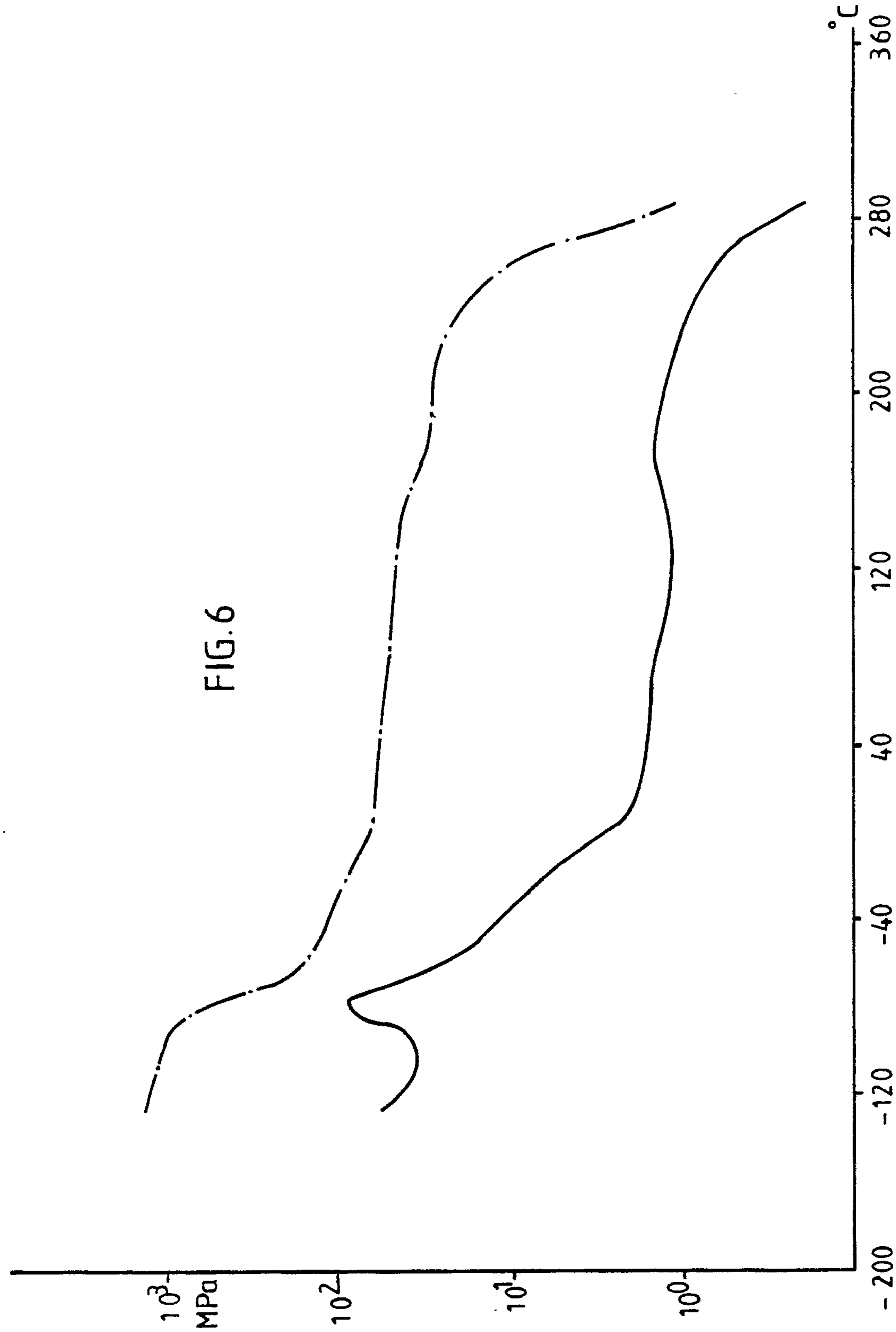


FIG.6

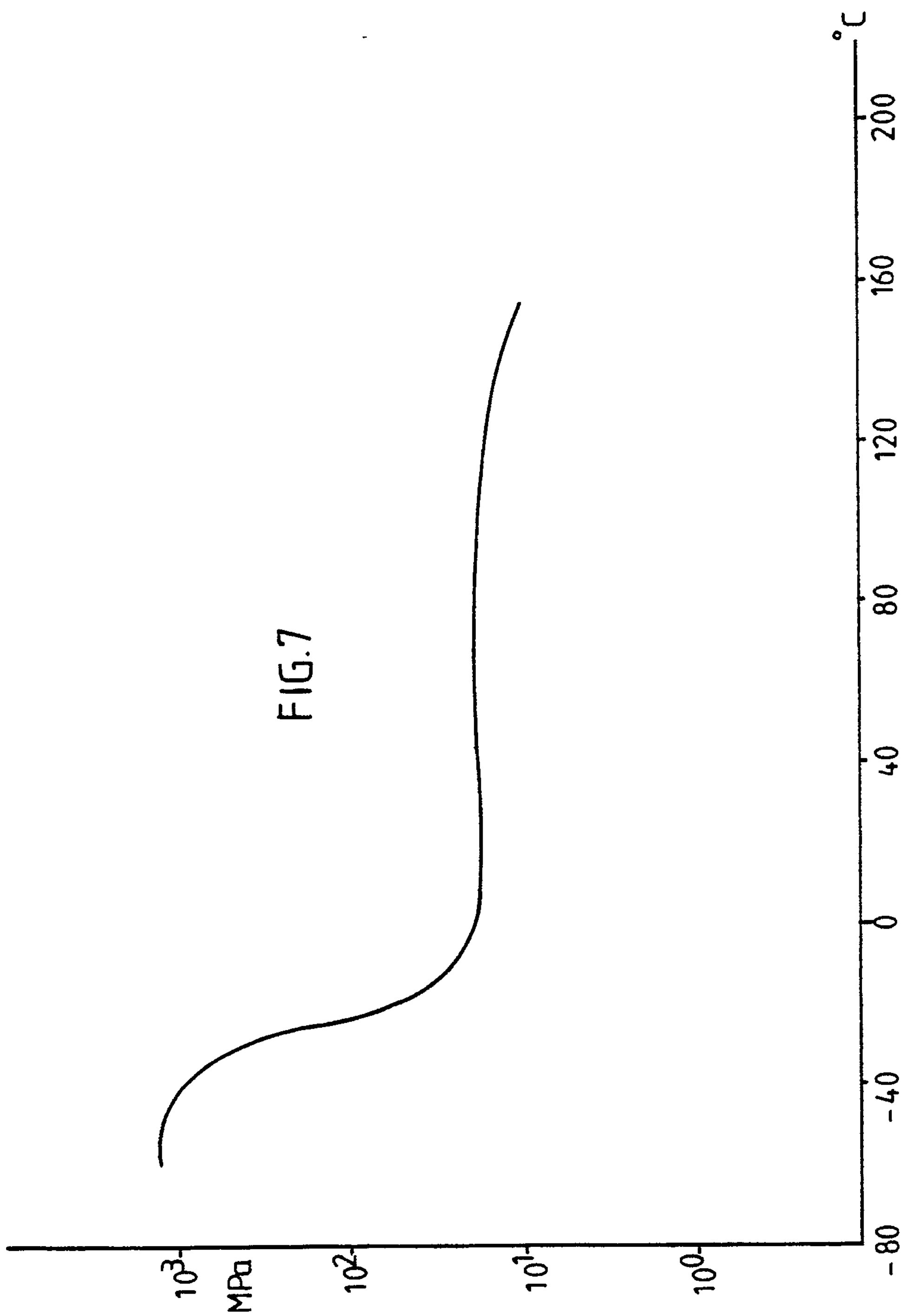


FIG.7

Europäisches Patentamt

# EUROPÄISCHER RECHERCHENBERICHT

Nummer der Anmeldung

**EP 90 12 4864**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 635 400 (BAYER)<br>* Anspruch 1; Seite 9, Zeilen 22-25; Seite 11, Absatz 1; Seite 14, Letzter Absatz - Seite 15, Absatz 1; Seite 22, Absatz 1 -Seite 23, Absatz 1 *<br>– – – | 1-5 | C 08 G 18/10<br>C 08 G 18/32 |
| X | DE-B-1 114 317 (CIBA)<br>* Ansprüche 1-3,5; Spalte 1, Zeile 23 - Spalte 2, Zeile 25; Spalte 5, Zeilen 2-3,52-55 *<br>– – – – – | 1-5 | |
| | | | **RECHERCHIERTE SACHGEBIETE (Int. Cl.5)** |
| | | | C 08 G |

Der vorliegende Recherchenbericht wurde für alle Patentansprüche erstellt

| Recherchenort | Abschlußdatum der Recherche | Prüfer |
|---|---|---|
| Den Haag | 11 Juli 91 | VAN PUYMBROECK M.A. |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument